(19) Europäisches Patentamt / European Patent Office / Office européen des brevets

(11) **EP 2 950 043 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(51) Int Cl.:
**G01B 11/26** *(2006.01)*     **G01B 11/12** *(2006.01)*
**G01B 11/27** *(2006.01)*

(21) Anmeldenummer: **15168707.6**

(22) Anmeldetag: **21.05.2015**

(54) **VERFAHREN ZUM ERMITTELN EINER GESCHLOSSENEN BAHNKURVE MITTELS EINES LASERS UND EINEM LASERLICHT-SENSOR UND VORRICHTUNG ZUM ERMITTELN EINER GESCHLOSSENEN BAHNKURVE**

METHOD FOR DETERMINING A CLOSED TRAJECTORY BY A LASER, AND A LASER LIGHT SENSOR AND DEVICE FOR DETERMINING A CLOSED TRAJECTORY

PROCÉDÉ DE DÉTERMINATION D'UNE TRAJECTOIRE SUR UNE TRAJECTOIRE FERMÉE À L'AIDE D'UN LASER ET D'UN CAPTEUR À LUMIÈRE LASER ET DISPOSITIF DE DÉTERMINATION D'UNE TRAJECTOIRE FERMÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2014 DE 102014210244**

(43) Veröffentlichungstag der Anmeldung:
**02.12.2015 Patentblatt 2015/49**

(73) Patentinhaber: **Prüftechnik Dieter Busch AG 85737 Ismaning (DE)**

(72) Erfinder:
• **Locoge, Pascal 85435 Erding (DE)**
• **Zöcke, Christine 85521 Riemerling (DE)**

(56) Entgegenhaltungen:
DE-A1- 10 109 462     DE-A1- 10 352 719
DE-A1-102006 012 633     DE-A1-102012 022 487
US-A- 5 717 491     US-A1- 2005 237 516
US-A1- 2006 196 060

EP 2 950 043 B1

## Beschreibung

Hintergrund der Erfindung

Die vorliegende Erfindung betrifft ein Verfahren zum Ermitteln einer geschlossenen Bahnkurve mittels eines Lasers und einem Laserlicht-Sensor und eine Vorrichtung zum Ermitteln einer geschlossenen Bahnkurve.

Verfahren und Vorrichtungen der eingangs genannten Art kommen insbesondere bei Meßverfahren zum Einsatz, die dafür vorgesehen sind, die Lage einer geradlinigen Referenzrichtung bzw. Referenzachse relativ zu der Lage der Zentrumsachse bzw. Symmetrieachse einer kreiszylindrischen Bohrung bzw. Öffnung eines Körpers oder einer Vorrichtung zu ermitteln, um diese Bohrung bzw. Öffnung z.B. fluchtend zu einer anderen Bohrung auszurichten, deren Zentrumsachse dann die Referenzachse darstellt. Hierfür wird der Laser so ausgerichtet, dass der Laserlichtstahl des Lasers mit der Referenzachse in Deckung gebracht werden kann. Ferner wird der Laserlicht-Sensor in einer definierten Lage in der Bohrung angeordnet und ein ebenes Messfeld des Laserlicht-Sensors wird normal zur Zentrumsachse der Bohrung und das Zentrum des Koordinatensystems des Messfelds wird wenigstens näherungsweise im Zentrum der Bohrung angeordnet. Unter Beibehaltung dieser Anordnung des Messfelds wird dieses in verschiedene zueinander geneigte Winkelstellungen gebracht bzw. gedreht, wobei das Messfeld in jeder Winkelstellung mit dem Laserlichtstrahl bestrahlt wird. Wenn dann eine Fehlausrichtung vorliegt, also wenn die Referenzachse nicht mit der Zentrumsachse fluchtet, beschreiben die in jeder Winkelstellung von dem Messfeld erfassten Koordinaten des Laserlicht-Flecks des Laserlichtstrahls auf dem ebenen Messfeld in der Regel eine geschlossene gekrümmte Bahnkurve in Form einer Ellipse oder eines Kreises, sofern von den eingestellten Winkelstellungen insgesamt ein Winkelbereich von 360 Grad abgedeckt wird. Der Mittelpunkt des Kreises bzw. der Ellipse liegt dann auf der Zentrumsachse und auf der Grundlage der Ausbildung des Kreises bzw. der Ellipse kann dann die Ausrichtung einer Referenzachse relativ zu einer Zentrumsachse einer zylindrischen Bohrung ermittelt werden.

Zur Messung der Winkelstellung bzw. des Neigungswinkels der Messfelder wird meist auf ein Winkelmessgerät wie ein Inklinometer zurückgegriffen, welches die Messung einer Neigung relativ zur Schwerkraftrichtung ermöglicht. Die Messung des Winkelstellung dient der Bestimmung der Winkellage der jeweils von dem Laserlicht-Fleck beschriebenen Bahnkurve und funktioniert mit hoher Genauigkeit, wenn die Bohrungen z.B. von Turbinen auszurichten sind, die im wesentlichen horizontal ausgerichtet sind. Für die Ermittlung einer Ausrichtung von im Wesentlichen vertikal ausgerichteten Bohrungen bzw. Öffnungen kann - bedingt durch das Meßprinzip - ein Inklinometer nicht oder nicht mit hinreichender Genauigkeit verwendet werden. Entsprechendes ist auch bei instabilen Böden der Fall, also wenn sich die Bohrung z.B. auf einem Schiff befindet.

Verfahren und Vorrichtungen, die mit Laserlicht-Sensoren mit ebenen Messfeldern und/oder mit Winkelmessern bzw. Inklinometern arbeiten sind allgemein z.B. aus der DE 195 06 471 A1, der DE 102 36 555 A1, der DE 101 42 462 A1, der DE 101 38 831 A1, der DE 39 11 307 A1, der DE 199 49 834 A1, der DE 10 2004 024 398 A1 und der DE 11 2044 000 113 T5 bekannt.

Aus der US 5 717 491 A ist ein Prozess und ein Verfahren zur Bestimmung der Zentrumslinie einer Wölbung bekannt. Aus der US 2005/0237516 A1 ist eine Messvorrichtung und ein Prozess zur Bestimmung der Geradheit von hohlen zylindrischen oder hohlen konischen Körpern und deren relative Orientierung zueinander bekannt. Aus der US 2006/0196060 A1 und der DE 10 2006 012633 A1 sind jeweils eine Vorrichtung und ein Prozess zur Ausrichtung von Maschinen, Maschinenteilen oder anderen technischen Artikeln bekannt. Aus der DE 10 2012 022 487 A1 ist eine Vorrichtung und ein Verfahren zum Ermitteln der Lage zweier gekuppelter Wellen zueinander bekannt. Aus der DE 103 52 719 A1 ist ein Verfahren zur Ausrichtung von zwei Objekten mit einer entsprechenden Vorrichtung bekannt. Aus der DE 101 09 462 A1 ist eine Vorrichtung und ein Verfahren zur Bestimmung der Achslage zweier Maschinenspindeln bekannt.

Zugrundeliegende Aufgabe

Es ist Aufgabe der Erfindung, ein Verfahren und eine Vorrichtung anzugeben, welche die Ermittlung der Ausrichtung einer Referenzachse relativ zu einer Zentrumsachse einer kreiszylindrischen Bohrung auch in Situationen mit hoher Genauigkeit ermöglichen, in welchen eine Messung eines Neigungswinkels nicht oder nicht mit einer hinreichenden Genauigkeit möglich ist.

Diese Aufgabe wird mit einem Verfahren mit den Merkmalen des unabhängigen Anspruchs 1 und mit einer Vorrichtung mit den Merkmalen des unabhängigen Anspruchs 7 gelöst.

Das Messfeld des Verfahrens bzw. der Vorrichtung weist ein Koordinatensystem mit einer X-Koordinatenachse und einer zu der X-Koordinatenachse rechtwinkeligen Y-Koordinatenachse auf, wobei der Laserlicht-Sensor dazu eingerichtet ist, die X-Koordinate und Y-Koordinate der Position des Laserlicht-Flecks des auf das Messfeld auftreffenden Laserlichtstrahls des Lasers auf dem Messfeld zu erfassen bzw. wobei der Laserlicht-Sensor dazu eingerichtet ist, die X-Koordinate und Y-Koordinate der Position des Laserlicht-Flecks zu erfassen, die sich beim Bestrahlen des Messfelds mit dem Laserlichtstrahl auf dem Messfeld ausbildet.

Das Verfahren umfasst die folgenden Schritte:

(A) Anordnen des Messfelds in einer kreiszylindrischen Bohrung oder in einer kreiszylindrischen Öffnung eines Körpers und Überführen des Messfelds in eine erste Lage,

(B) Bestrahlen des Messfelds mit einem von dem Laser erzeugten Laserlichtstrahl und Erfassen der X-Koordinate und der Y-Koordinate der Position des Laserlicht-Flecks des Laserlichtstrahls, welche der Laserlicht-Fleck auf dem Messfeld einnimmt,

(C) Zeitlich aufeinanderfolgendes Überführen des Messfelds in wenigstens zwei weitere Lagen, Bestrahlen des Messfelds mit dem Laserlichtstrahl in jeder der weiteren Lagen und Erfassen der X-Koordinate und der Y-Koordinate der Positionen des Laserlicht-Flecks des Laserlichtstrahls, welche der Laserlicht-Fleck auf dem Messfeld in jeder der weiteren Lagen einnimmt,

wobei in der ersten Lage und auch in jeder der weiteren Lagen die X-Koordinatenachse und die Y-Koordinatenachse rechtwinkelig zur Zentrumsachse der Bohrung orientiert sind und das Zentrum des Koordinatensystems einen vorgegebenen Abstand zu der Innenfläche der Bohrung in Richtung der X-Koordinatenachse oder der Y-Koordinatenachse aufweist, wobei sich weiteren Lagen durch die Größe des Lagewinkels unterscheiden, um welchen die Y-Koordinatenachse oder die X-Koordinatenachse in einem vorgegebenen Drehsinn gegenüber der Y-Koordinatenachse oder der X-Koordinatenachse des Messfelds in der ersten Lage geneigt ist, und wobei das Messfeld in Schritt C derart zeitlich aufeinanderfolgend in die wenigstens zwei weiteren Lagen überführt wird, dass der Lagewinkel jeder der weiteren Lagen größer ist als der Lagewinkel jeder zeitlich zuvor eingenommenen weiteren Lage, wobei in der zeitlich zuletzt eingenommenen Lage die Größe des Lagewinkels wenigstens 90 Grad beträgt,

(D) Zuordnen des Winkelwerts null Grad der in der ersten Lage des Messfelds (16) erfassten X-Koordinate und Y-Koordinate,

(E) Ermitteln der geschlossenen Bahnkurve (10) mittels der in Schritt (B) und (C) erfassten X-Koordinaten und/oder der in Schritt (B) und(C) erfassten Y-Koordinaten,

wobei in Schritt (E) ferner auf der Grundlage der erfassten X-Koordinaten und/oder der erfassten Y-Koordinaten eine Darstellung der Bahnkurve (10) ermittelt wird, die durch den Lagewinkel des Messfelds (16) parametrisiert ist, der sich ausgehend von dem Winkelwert null Grad in Richtung des vorgegebenen Drehsinns bemisst bzw. der sich ausgehend von dem Lagewinkel mit dem Winkelwert null Grad in Richtung des vorgegebenen Drehsinns bemisst bzw. der sich ausgehend von der durch den Lagewinkel bzw. Winkel mit dem Winkelwert null Grad definierten Richtung bzw. Raumrichtung in Richtung des vorgegebenen Drehsinns bemisst.

Die Schritte A bis C dienen in an sich bekannter Weise der Erfassung der Positionen des Laserlicht-Flecks in den unterschiedlichen Lagen umfassend die erste Lage und die wenigstens zwei weiteren Lagen. Dadurch dass das Zentrum des Koordinatensystems einen vorgegebenen Abstand zu der Innenfläche der Bohrung in Richtung der X-Koordinatenachse oder der Y-Koordinatenachse aufweist bzw. einen sich in Richtung der X-Koordinatenachse oder der Y-Koordinatenachse bemessenden vorgegebenen Abstand zu der Innenfläche bzw. der Innenwandung der kreiszylindrischen Bohrung aufweist, kann gewährleistet werden, dass das Zentrum des Koordinatensystems in jeder der zueinander geneigten Lagen eine definierte Position aufweist.

Wenn der vorgegebene Abstand dem Radius der kreiszylindrischen Bohrung entspricht bzw. im wesentlichen entspricht befindet sich das Zentrum des Koordinatensystems in jeder der zueinander geneigten Lagen im Zentrum bzw. näherungsweise im Zentrum der Bohrung, wodurch der Fehlereinfluß einer Verschiebung des Zentrums insbesondere beim Wechseln bzw. Überführen von einer Lage in die andere Lage vorteilhaft deutlich reduziert werden kann. Aufgrund des oben dargelegten entspricht der vorgegebene Abstand zu der Innenfläche der Bohrung in Richtung der X-Koordinatenachse oder der Y-Koordinatenachse besonders bevorzugt dem Radius der kreiszylindrischen Bohrung.

In Schritt B erfolgt das Bestrahlen des Messfelds mit dem von dem Laser erzeugten Laserlichtstrahl und das Erfassen der X-Koordinate und der Y-Koordinate der Position des Laserlicht-Flecks des Laserlichtstrahls, welche der Laserlicht-Fleck auf dem Messfeld einnimmt. Bei dem Laserlichtstrahl, der fluchtend zu einer Referenzachse ausgerichtet sein kann, handelt es sich um einen raumfesten Laserlichtstrahl, dessen Laserlicht-Fleck, wenn der Laserlichtstrahl von der Zentrumsachse der Bohrung beabstandet auf das Messfeld auftritt, auf dem Messfeld beim Überführen in mehrere der zueinander geneigten Lagen eine Ellipse oder einen Kreis beschreibt. Insofern erfolgt das Bestrahlen des Messfelds mit dem Laserlichtstrahl also derart, dass der Laserlichtstrahl beabstandet von der Zentrumsachse der Bohrung auf das Messfeld trifft.

In Schritt C wird das Messfeld derart zeitlich aufeinanderfolgend in die wenigstens zwei weiteren Lagen überführt, dass der Lagewinkel jeder der weiteren Lagen größer ist als der Lagewinkel jeder zeitlich zuvor eingenommenen Lage bzw. weiteren Lage. Oder in anderen Worten: Die Größe des Lagewinkels vergrößert sich von Lage zu Lage beim zeitlich aufeinanderfolgenden Überführen gemäß Schritt C.

Zur Bestimmung der Winkellage einer geschlossen Bahnkurve in Form einer Ellipsenbahn bzw. Kreisbahn bzw. zur Bestimmung einer Darstellung der Ellipsenbahn bzw. Kreisbahn auf der Grundlage von erfassten X-Koordinaten und Y-Koordinaten der Laserlichtflecks auf einem Messfeld, die durch einen Neigungswinkel des Messfelds parametrisiert ist, wird bei bekannten Verfahren der Neigungswinkel des Messfelds relativ zur Schwerkraftrichtung mittels eines Drehwinkelmessers bzw. Meßzeigers, wie z.B. einem Inklinometer gemessen, einhergehend mit dem Nachteil, dass diese Messung - bedingt durch das Meßprinzip des Inklinometers bzw. eines beliebigen Neigungsmessers - bei der Ermittlung der Ausrichtung einer Referenzachse relativ zu einer Zentrumsachse einer kreiszylindrischen Bohrung eines Körpers oder einer Vorrichtung, wie z.B. einer Turbine oder eines Motors, nicht oder nicht mit hinreichender Genauigkeit möglich ist. Entsprechendes ist auch bei instabilen Böden der Fall, also wenn die sich die auszurichtenden Bohrungen z.B. auf einem Schiff befinden.

Im Unterschied zu den obigen bekannten Lösungen kann mittels des erfindungsgemäßen Verfahrens die Ermittlung der Ausrichtung einer Referenzachse relativ zu einer Zentrumsachse einer zylindrischen Bohrung oder Öffnung eines Körpers oder einer Vorrichtung auch in Situationen mit hoher Genauigkeit möglich gemacht werden, in welchen eine Messung des Neigungswinkels des Messfelds nicht oder nicht mit einer hinreichenden Genauigkeit möglich ist. Denn in Schritt E des erfindungsgemäßen Verfahrens wird auf der Grundlage der in Schritt B und C erfassten X-Koordinaten und/oder Y-Koordinaten eine Darstellung der Ellipsenbahn ermittelt, die durch den Lagewinkel des Messfelds parametrisiert ist, der sich ausgehend von dem Winkelwert null Grad (vgl. Schritt D) in Richtung des vorgegebenen Drehsinns bemisst. Das heißt, dass vorteilhaft eine Messung des Neigungswinkels bzw. Lagewinkels beim Erfassen der X-Koordinaten und Y-Koordinaten der Positionen des Laserlicht-Flecks auf dem ebenen Messfeld in vorteilhafter Weise nicht vorgenommen werden muss. Denn die Winkellage bzw. die Parameterdarstellung der geschlossen Bahnkurve bzw. der gekrümmten geschlossenen Bahnkurve, die insbesondere eine Ellipse oder ein Kreis sein kann, wird vorteilhaft unter Verwendung der in Schritt B und Schritt C erfassten Koordinaten, des Winkelwerts in Höhe von null Grad bzw. der Zuordnung dieses Winkelwerts zu der X-Koordinate und der Y-Koordinate (vgl. Schritt D) und unter Verwendung des vorgegebenen Drehsinns ermittelt. Der Drehsinn kann hierbei insbesondere von einem Anwender vorgegeben werden, der zur Realisierung des zeitlich aufeinanderfolgenden Überführens das Messfeld z.B. manuell versetzen bzw. verdrehen kann. Insbesondere ist auch keine Messung erforderlich um die Größe bzw. den Winkelwert der zeitlich zuletzt eingenommenen Lage, die wenigstens 90 Grad beträgt, zu messen. Hierfür sind erfindungsgemäß die Lagen vorteilhaft derart zu wählen, dass sich für die zeitlich zuletzt eingenommene Lage ein Winkel von wenigstens 90 Grad ergibt. Dies kann auf einfache und praktische Weise durch einfach vorzunehmendes grobes Abschätzen erfolgen Die Ermittlung der genauen Winkellage bzw. die Ermittlung der genauen durch den Lagewinkel parametrisierten Bahnkurve erfolgt hingegen in Schritt E.

Das Überführen des Messfelds von einer Lage in eine andere Lage in Schritt C kann auf beliebige denkbare Weise erfolgen. Insbesondere kann das Messfeld hierfür z.B. derart beweglich an einer Halteinrichtung angebracht sein, dass das Messfeld an der Halteeinrichtung in die erste und weitere Lage überführbar ist, wobei zum Arretieren des Messfeld in einer vorgesehenen Lage z.B. geeignete Arretierungsmittel zum Arretieren des Messfelds an der Halteeinrichtung vorgesehen sein können.

Bei dem Laserlicht-Sensor kann es sich um einen beliebigen mit einem ebenen Messfeld versehenen Laserlicht-Sensor handeln. Besonders bevorzugt handelt es sich um einen Laserlicht-Sensor, der eine Mehrzahl von Zeilensensoren - z.B. nach Art der in digitalen Fotokameras eingesetzten Zeilensensoren - zur Ausbildung des Messfelds aufweist. Die von dem Laserlicht-Sensor erfassten X-Koordinaten und Y-Koordinaten können in Form analoger oder digitaler Signale über einen Signalübertragungsweg - auch kabellos- z.B. einer Auswerteeinrichtung, wie z.B. einem Computer z.B. in Form eines Laptops oder eines Tablets zur weiteren Auswertung zugeführt werden.

Dass zwei Achsen -wie z.B. die Zentrumsache der Bohrung und die X-Koordinatenachse bzw. die Zentrumsache der Bohrung und die Y-Koordinatenachse - eine rechtwinkelige bzw. im Wesentlichen rechtwinkelige Orientierung bzw. Ausrichtung zueinander aufweisen, setzt selbstverständlich nicht voraus, dass sich diese Achsen immer schneiden müssen. Wobei, wenn sich die beiden Achsen nicht schneiden, diese durch eine translatorische Verschiebung einen gemeinsamen Schnittpunkt ausbilden und dann einen rechten bzw. im wesentlichen rechten Winkel einschließen können.

Wenn im Zusammenhang mit der Größe des Lagewinkels ausgeführt wird, dass die Y-Koordinatenachse oder die X-Koordinatenachse in einem vorgegebenen Drehsinn gegenüber der Y-Koordinatenachse oder der X-Koordinatenachse des Messfelds in der ersten Lage um einen Lagewinkel mit einem vorgegebenen Drehsinn geneigt ist, so bedeutet das nicht zwangsläufig, dass z.B. die X-Koordinatenachse in der ersten Lage mit der X-Koordinatenachse in der zweiten Lage einen Schnittpunkt bildet. Der Begriff der Neigung umfasst vielmehr, dass, wenn kein gemeinsamer Schnittpunkt gebildet wird, die X-Koordinatenachse der ersten bzw. der weiteren Lage durch wenigstens eine translatorische Verschiebung des Messfelds einen gemeinsamen Schnittpunkt ausbilden können bzw. zu Schnitt gebracht werden können.

Die vorteilhaft ohne Inklinometermessung durch das erfindungsgemäße Verfahren ermittelbare geschlossene gekrümmte Bahnkurve kann dann vorteilhaft in z.B. aus der DE ?? (sofern bekannt bitte eine entsprechende Patentschrift ergänzen !) bekannten Weise für die Ermittlung der Ausrichtung bzw. Lage einer Referenzachse relativ zu einer Zentrumsachse einer kreiszylindrischen Bohrung eines Körpers oder einer Vorrichtung verwendet werden, so dass mittels des erfindungsgemäßen Verfahrens also vorteilhaft die Ermittlung der Ausrichtung bzw. Lage einer Referenzachse relativ zu einer Zentrumsachse einer kreiszylindrischen Bohrung eines Körpers oder einer Vorrichtung auch in Situationen mit hoher Genauigkeit ermöglicht bzw. realisiert werden kann, in welchen eine Messung des Lagewinkels nicht oder nicht mit einer hinreichenden Genauigkeit möglich ist.

Bei dem erfindungsgemäßen Verfahren ist in Schritt C vorgesehen, dass das Messfeld B in wenigstens zwei weitere Lagen zeitlich aufeinanderfolgend überführt wird. Besonders vorteilhaft kann das Messfeld jedoch in eine wesentlich höhere Anzahl von Lagen überführt werden, wodurch der Ermittlung der geschlossenen Bahnkurve eine hohe Anzahl von Positionen zugrundegelegt werden kann, einhergehend mit einer sehr genauen Genauigkeit bei dem Ermitteln bzw. Bestimmen der Bahnkurve, die z.B. in bekannter Weise durch Kurvenanpassung an die erfassten X-Koordinaten und Y-Koordinaten ermittelt werden kann. So kann diese höhere Anzahl von Lagen vorzugweise wenigstens zehn oder zwanzig oder mehr als zehn oder zwanzig betragen.

Bei der vorstehend und nachstehend erwähnten X-Koordinate und Y-Koordinate der Position des Laserlicht-Flecks des auf das Messfeld auftreffenden Laserlichtstrahls bzw. des sich auf dem Messfeld beim Bestrahlen mit dem Laserlichtstrahl ausbildenden Laserlicht-Flecks handelt es sich um die Koordinaten einer Position in Form eines Punktes obwohl der Laserlicht-Fleck immer eine flächige Ausdehnung auf dem Messfeld hat. Unter den X-Koordinaten und Y-Koordinaten der Position des Laserlicht-Flecks sind vorstehend und nachstehend immer die Koordinaten eines Punktes zu verstehen, der aus der Ausbildung der Fläche und/oder der Helligkeitsverteilung des Laserlicht-Flecks auf der Fläche ermittelt werden kann. Insbesondere kann es sich bei dem Punkt z.B. um den Flächenschwerpunkt des Laserlicht-Flecks handeln. Die Ermittlung bzw. Berechnung des Punktes kann vorzugsweise automatisiert mittels einer Berechnungsvorrichtung, wie z.B. einem Computer auf der Grundlage von dem jeweiligen Laserlicht-Fleck zugeordneten digitalen und/oder analogen Signalen vorgenommen werden, die von dem Laserlicht-Sensor ausgegeben werden.

Bei einer besonders bevorzugten Ausführungsform des erfindungsgemäßen Verfahrens wird das Messfeld in Schritt C in wenigstens fünfzehn weitere Lagen überführt, wobei in der zeitlich zuletzt eingenommenen Lage die Größe des Lagewinkels 360 Grad beträgt, und in Schritt E wird eine geschlossene und durch den Lagewinkel des Messfelds parametrisierte Bahnkurve in Form einer Ellipse oder eines Kreises ermittelt, wobei zum Ermitteln der parametrisierten Bahnkurve ausschließlich nur die erfassten Y-Koordinaten oder ausschließlich nur die erfassten X-Koordinaten verwendet werden. Bei dieser besonders bevorzugten Ausführungsform wird insgesamt gesehen eine Lageveränderung nach Art einer Drehung um 360 Grad abgedeckt. Auch dieser erwünschte Lagewinkel der zeitlich zuletzt eingenommenen Lage kann auf einfache und praktische Weise ohne Inklinometermessung eingestellt bzw. bewerkstelligt werden.

Die obige besonders bevorzugte Ausführungsform ist insbesondere dann vorteilhaft, wenn infolge von Meßungenauigkeiten die erfassten X-Koordinaten oder die erfassten Y-Koordinaten eine große Schwankung, insbesondere in Bezug auf eine durch Kurvenanpassung an die erfassten X-Koordinaten und Y-Koordinaten ermittelte Bahnkurve in Form eines Kreises oder einer Ellipse aufweisen. Es konnte auch durch Versuchsreihen gezeigt werden, dass trotz Vorliegens großer Schwankungen der X-Koordinate oder der Y-Koordinate eine mittels dieser besonders bevorzugten Ausführungsform ermittelte geschlossene Bahnkurve der Bahnkurve, die der Laserlichtfleck ohne die Meßungenauigkeiten auf dem ebenen Messfeld beschreiben würde, sehr nahe kommt bzw. vorteilhaft nur sehr geringfügig von dieser abweicht (bitte ggf. ergänzen bzw. mitteilen, welche Ursache die Meßungenauigkeiten bei der Anwendung Centralign/Boralign haben können).

Zum Ermitteln dieser Schwankung der X-Koordinaten bzw. der Y-Koordinaten kann in bekannter Weise für jede erfasste Position des Laserlicht-Flecks der Abstand der Position zu der Ellipse oder dem Kreis in Richtung parallel zur X-Koordinatenachse und/oder in Richtung parallel zur Y-Koordinatenachse - also der sich in einer Richtung parallel zur X-Koordinatenachse bzw. Y-Koordinatenachse bemessende Abstand - ermittelt und ein Mittelwert dieser Abstände gebildet werden.

Wenn also die quantifizierte Schwankung der X-Koordinaten bzw. Y-Koordinaten zu hoch ist bzw. ein vorgegebenes Maß überschreitet, kann gemäß der obigen bevorzugten Ausführungsform durch ausschließliches Verwenden der Y-Koordinaten, wenn die X-Koordinaten zu stark schwanken bzw. durch ausschließliches Verwenden der X-Koordinaten, wenn die Y-Koordinaten zu stark schwanken, eine geschlossene gekrümmte Bahnkurve in Form einer Ellipse oder eines Kreises bereitgestellt werden, die der Bahnkurve, die der Laserlicht-fleck ohne die Meßungenauigkeiten auf dem ebenen Messfeld beschreiben würde, sehr nahe kommt und mithin zur Ermittlung der Ausrichtung einer Referenzachse relativ zu einer Zentrumsachse einer zylindrischen Bohrung eines Körpers oder einer Vorrichtung vorteilhaft herangezogen werden kann.

Auch bei der obigen besonders bevorzugten Ausführungsform kann in Schritt C eine Überführung in wesentlich mehr als fünfzehn Lagen vorgesehen sein. So kann vorteilhaft eine höhere Anzahl von vorzugweise wenigstens zwanzig oder dreißig mehr als zwanzig oder dreißig Lagen vorgesehen sein, einhergehend mit der Erhöhung der Genauigkeit der geschlossenen Bahnkurve, wie bereits auch oben dargelegt.

Bevorzugt erfolgt das Ermitteln einer parametrisierten Bahnkurve in Form einer Ellipse oder eines Kreises ausschließlich auf der Grundlage der erfassten Y-Koordinaten oder ausschließlich auf der Grundlage der erfassten X-Koordinaten mittels einer Funktion, die unter anderem auf einer Ellipsengleichung beruht, wie nachfolgend beispielhaft für den Fall dargelegt, bei dem ausschließlich nur die erfassten Y-Koordinaten herangezogen werden.

So können die erfassten Y-Koordinaten zunächst gemäß der folgenden Beziehung skaliert und normiert werden:

$$Ynormiert = \frac{y - (\frac{ymax + ymin}{2})}{(\frac{ymax - ymin}{2})}$$

Ferner kann unter Verwendung der Gleichung einer zentrierten und rotierten Ellipse

$$Ymax = a \cos t \sin \theta o + b \sin t cos \theta o$$

und auf der Grundlage der obigen Normierung folgende Beziehung ermittelt werden:

$$Ymax = \sqrt{a^2 (\sin \theta o)^2 + b^2 (\cos \theta o)^2}$$

Die zentrierten bzw. skalierten und normierten Messwerte lassen sich dann in Form folgender Sinusfunktion ausdrücken:

$$\frac{y}{ymax} = \frac{y}{\sqrt{a^2 (\sin \theta o)^2 + b^2 (\cos \theta o)^2}} = \sin(\varphi o + t).$$

Somit kann dann mittels der Beziehung

$$\varphi = \sin^{-1}(\frac{y - \left(\frac{ymax + ymin}{2}\right)}{\left(\frac{ymax - ymin}{2}\right)})$$

jeder erfassten Y-Koordinate der Position des Laserlicht-Flecks auf dem ebenen Messfeld ein Lagewinkel $\varphi$ des Messfelds zugeordnet werden, so dass die auf diese Weise bereitgestellten Punkte bzw. Positionen eine geschlossene gekrümmte Bahnkurve in Form einer Ellipse (oder eines Kreises, da der Kreis ein Spezialfall einer Ellipse ist) beschreiben, die durch einen Winkel $\varphi$ parametrisiert ist, wobei bei der letzten Beziehung eine Skalierung zwischen 0 Grad und 360 Grad vorzunehmen ist, da die Funktion arcsin nur auf dem Wertebereich [-90 Grad, 90 Grad] definiert ist.

Bei einer weiteren bevorzugten Ausführungsform des erfindungsgemäßen Verfahrens wird das Messfeld in Schritt C in wenigstens zwei weitere Lagen überführt, wobei in der zeitlich zuletzt eingenommenen Lage die Größe des Lagewinkels wenigstens 90 Grad und weniger als 360 Grad oder im wesentlichen 180 Grad beträgt, wobei in Schritt E eine geschlossene Bahnkurve 10 in Form einer Ellipse oder eines Kreises durch Kurvenanpassung an die erfassten X-Koordinaten und Y-Koordinaten ermittelt wird, und wobei zum Ermitteln der parametrisierten Darstellung der Bahnkurve jedem Punkt auf der Bahnkurve der sich ausgehend von dem Winkelwert null Grad bzw. dem Winkelwert in Höhe von null Grad in Richtung des vorgegebenen Drehsinns bemessende Lagewinkel zugeordnet wird. Auch bei dieser weiteren bevorzugten Ausführungsform kann in Schritt C eine Überführung in wesentlich mehr als zwei Lagen vorgesehen sein. So kann vorteilhaft eine höhere Anzahl von vorzugweise wenigstens zehn oder zwanzig oder mehr als zehn oder zwanzig Lagen vorgesehen sein, einhergehend mit der Erhöhung der Genauigkeit der geschlossenen Bahnkurve.

Die obige weitere bevorzugte Ausführungsform ist insbesondere dann von Vorteil, wenn infolge von vorliegenden räumlichen Gegebenheiten eine Realisierung der 360 Grad bzw. eine Drehung um 360 Grad nicht möglich ist, wobei diese Ausführungsform vorzugsweise auch nur dann zum Ermitteln der parametrisierten Bahnkurve verwendet wird, wenn die erfassten X-Koordinaten oder die erfassten Y-Koordinaten keine zu große Schwankung infolge von Meßungenauigkeiten, insbesondere in Bezug auf eine durch Kurvenanpassung an die erfassten X-Koordinaten und Y-Koordinaten ermittelte Bahnkurve in Form eines Kreises oder einer Ellipse aufweisen - bezüglich der Schwankungen vgl. hierzu auch die entsprechenden obigen Ausführungen.

Insbesondere durch Versuchsreihen konnte gezeigt werden, dass trotz Vorliegens von Schwankungen der X-Koordinate oder der Y-Koordinate mittels der weiteren bevorzugten Ausführungsform eine geschlossene Bahnkurve in Form eines Kreises oder einer Ellipse ermittelt bzw. bestimmt werden kann, die der Bahnkurve, die Laserlichtfleck ohne die Meßungenauigkeiten auf dem ebenen Messfeld beschreiben würde, sehr nahe kommt bzw. vorteilhaft nur sehr geringfügig von dieser abweicht, so dass die ermittelte geschlossene Bahnkurve dann vorteilhaft in bekannter Weise für die Ermittlung der Ausrichtung einer Referenzachse relativ zu einer Zentrumsachse einer zylindrischen Bohrung eines Körpers oder einer Vorrichtung herangezogen werden kann.

Besonders bevorzugt werden die Schritte D und E automatisiert vorgenommen, so dass das erfindungsgemäße Verfahren vorteilhaft z.B. in einen laufenden Produktionsprozess integriert werden kann, in welchem eine regemäßige Überwachung der Ausrichtung einer Referenzachse relativ zu einer Zentrumsachse einer zylindrischen Bohrung eines Körpers oder einer Vorrichtung erwünscht bzw. erforderlich ist.

Durch die Benennung der Schritte mit den Buchstaben A bis E ist keine Bindung bzw. keine ausschließliche Bindung an eine zeitliche Reihenfolge zu verstehen. So werden die Schritte A, B, C und E aufeinanderfolgend durchgeführt während Schritt D auch bereits nach Schritt B durchgeführt werden kann. Insbesondere können aber auch alle Schritte aufeinanderfolgend durchgeführt werden, also Schritt B nach Schritt A, Schritt C nach Schritt B, Schritt D nach Schritt C und Schritt E nach Schritt D.

Die erfindungsgemäße Vorrichtung zum Ermitteln einer geschlossenen Bahnkurve umfasst einen Laser, einen Laserlicht-Sensor mit einem ebenen Messfeld, eine Halteeinrichtung und eine Auswerteeinheit.

Das Messfeld weist ein Koordinatensystem mit einer X-Koordinatenachse und einer zu der X-Koordinatenachse rechtwinkeligen Y-Koordinatenachse auf. Der Laserlicht-Sensor ist dazu eingerichtet, die X-Koordinate und Y-Koordinate der Position des Laserlicht-Flecks des auf das Messfeld auftreffenden Laserlichtstrahls auf dem Messfeld zu erfassen, der von dem Laser erzeugbar ist.

Das Messfeld ist derart beweglich an der Halteeinrichtung angebracht, dass das Messfeld in eine erste und weitere Lagen an der Halteeinrichtung überführbar ist, in welchen die X-Koordinatenachse und die Y-Koordinatenachse rechtwinkelig zur Zentrumsachse einer kreiszylindrischen Bohrung orientiert sind und in welchen das Zentrum des Koordinatensystems einen vorgegebenen Abstand zu der Innenfläche der Bohrung in Richtung der X-Koordinatenachse oder der Y-Koordinatenachse aufweist, wobei sich weiteren Lagen durch die Größe des Lagewinkels unterscheiden, um welchen die Y-Koordinatenachse oder die X-Koordinatenachse in einem vorgegebenen Drehsinn gegenüber der Y-Koordinatenachse oder der X-Koordinatenachse des Messfelds in der ersten Lage geneigt ist.

Die Auswerteeinheit ist dazu eingerichtet, der in der ersten Lage des Messfelds erfassten X-Koordinate und Y-Koordinate den Winkelwert null Grad zuzuordnen und aus den in der ersten und den weiteren Lagen erfassten X-Koordinaten und/oder Y-Koordinaten die geschlossene Bahnkurve zu ermitteln.

Die Auswerteinheit ist ferner dazu eingerichtet, auf der Grundlage der erfassten X-Koordinaten und/oder der erfassten Y-Koordinaten eine Darstellung der Bahnkurve zu ermitteln, die durch den Lagewinkel des Messfelds parametrisiert ist, der sich ausgehend von dem Winkelwert null Grad bzw. dem Winkelwert in Höhe von null Grad in Richtung des vorgegebenen Drehsinns bemisst.

Die erfindungsgemäße Vorrichtung zeichnet sich insbesondere dadurch aus, dass die Auswerteeinheit dazu eingerichtet ist, auf der Grundlage der erfassten X-Koordinaten und/oder Y-Koordinaten eine Darstellung der geschlossenen Bahnkurve zu ermitteln, die durch den Lagewinkel des Messfelds parametrisiert ist, der sich ausgehend von dem Winkelwert null Grad bzw. dem Winkelwert in Höhe von null Grad in Richtung des vorgegebenen Drehsinns bemisst.

Daher kann, analog zu den bereits oben im Zusammenhang mit dem erfindungsgemäßen Verfahren dargelegten Gründen, mittels der erfindungsgemäßen Vorrichtung die Ermittlung der Ausrichtung einer Referenzachse relativ zu einer Zentrumsachse einer kreiszylindrischen Bohrung eines Körpers auch in Situationen mit hoher Genauigkeit ermöglicht werden, in welchen eine Messung des Lagewinkels des Messfelds nicht oder nicht mit einer hinreichenden Genauigkeit möglich ist.

Bei einer bevorzugten Ausführungsform ist die geschlossene Bahnkurve eine Ellipse oder ein Kreis, und die Auswerteeinheit ist ferner dazu eingerichtet, zum Ermitteln der durch den Lagewinkel parametrisierten Bahnkurve ausschließlich nur die erfassten Y-Koordinaten oder ausschließlich nur die erfassten X-Koordinaten zu verwenden, wenn das Messfeld in wenigstens fünfzehn weitere Lagen überführt wird und wenn in der zeitlich zuletzt eingenommenen Lage die Größe des Lagewinkels 360 Grad beträgt, einhergehend mit den bereits oben im Zusammenhang mit dem erfindungsgemäßen Verfahren dargelegten Vorteilen. Die ermittelte geschlossene gekrümmte Bahnkurve kann dann vorteilhaft in bekannter Weise zur Ermittlung der Ausrichtung einer Referenzachse relativ zu einer Zentrumsachse einer zylindrischen Bohrung eines Körpers oder einer Vorrichtung herangezogen werden.

Bei einer weiteren bevorzugten Ausführungsform ist die Auswerteeinheit dazu eingerichtet, eine geschlossene Bahnkurve in Form einer Ellipse oder eines Kreises durch Kurvenanpassung an die erfassten X-Koordinaten und Y-Koordinaten zu ermitteln und zum Ermitteln der parametrisierten Darstellung der Bahnkurve jedem Punkt auf der Bahnkurve den sich ausgehend von dem Winkelwert null Grad in Richtung des vorgegebenen Drehsinns bemessenden Lagewinkel zugzuordnen, wenn das Messfeld in wenigstens zwei weitere Lagen überführt wird und in der zeitlich zuletzt eingenommenen Lage die Größe des Lagewinkels wenigstens 90 Grad und weniger als 360 Grad oder im wesentlichen 180 Grad beträgt, einhergehend mit den bereits oben im Zusammenhang mit dem erfindungsgemäßen Verfahren dargelegten Vorteilen.

Kurzbeschreibung der Zeichnung

Nachfolgend werden Ausführungsbeispiele der Erfindung anhand der beigefügten Zeichnung näher erläutert. In der Zeichnung zeigt

Fig. 1A    eine schematische Darstellung eines Ausführungsbeispiels einer Vorrichtung zum Ermitteln einer geschlossenen Bahnkurve,

Fig. 1B    eine schematische Vorderansicht auf das Messfeld gemäß Fig. 1A

Fig. 2    eine schematische Darstellung von auf einem Messfeld ausgebildeten Laserlicht-Flecken eines Lasers zusammen mit einer Ellipsenkurve, und

Fig. 3    eine schematische Darstellung einer durch einen Lagewinkel parametrisierten geschlossenen Bahnkurve in Form einer Ellipse.

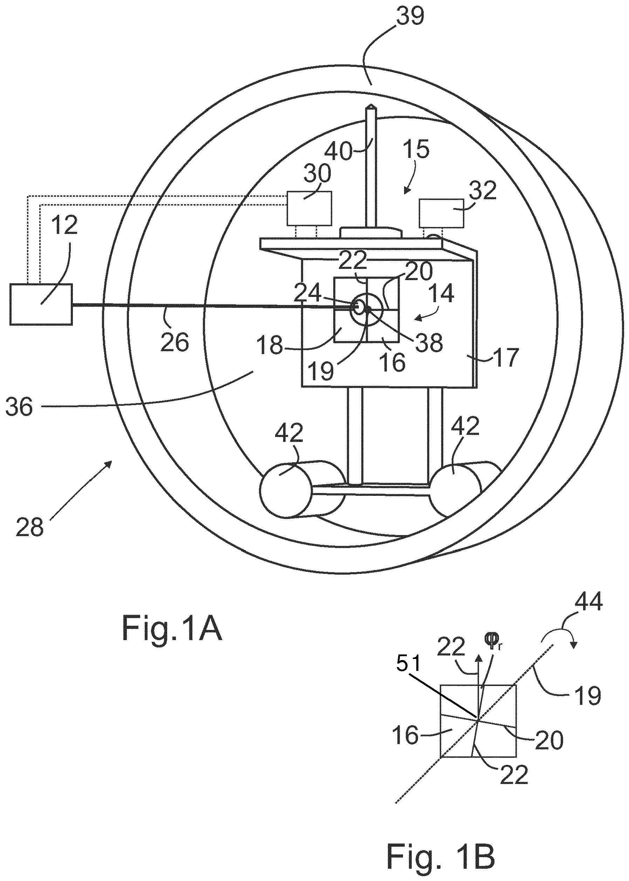

Die Vorrichtung 28 zum Ermitteln einer geschlossenen Bahnkurve umfasst einen Laser 12, einen Laserlicht-Sensor 14 mit einem ebenen Messfeld 16, eine Halteeinrichtung 17 und eine Auswerteeinheit 32.
Das Messfeld 16 weist ein Koordinatensystem 18 mit einer X-Koordinatenachse 20 und einer zu der X-Koordinatenachse 20 rechtwinkeligen Y-Koordinatenachse 22 auf.
Der Laserlicht-Sensor 14 ist dazu eingerichtet, die X-Koordinate und Y-Koordinate der Position des Laserlicht-Flecks 24 des auf das Messfeld 16 auftreffenden Laserlichtstrahls 26 auf dem Messfeld 16 zu erfassen, der von dem Laser 12 erzeugbar ist.
Das Messfeld 16 ist derart beweglich an der Halteeinrichtung 17 angebracht, dass das Messfeld 16 in eine erste und weitere Lagen an der Halteeinrichtung 17 überführbar ist, in welchen die X-Koordinatenachse 20 und die Y-Koordinatenachse 22 rechtwinkelig zur Zentrumsachse 38 (in Fig. 1A nur sehr schematisch durch einen schwarzen Punkt symbolisiert) einer kreiszylindrischen Bohrung 36 orientiert sind und in welchen das Zentrum 51 des Koordinatensystems 18 einen vorgegebenen Abstand zu der Innenfläche 46 der Bohrung 36 in Richtung der X-Koordinatenachse oder der Y-Koordinatenachse aufweist, der dem Radius der kreiszylindrischen Bohrung 36 entspricht.
Die weiteren Lagen unterscheiden sich durch die Größe des Lagewinkels $\varphi_r$ (vgl. Fig. 1B), um welchen die Y-Koordinatenachse 22 in einem vorgegebenen Drehsinn 44 gegenüber der Y-Koordinatenachse des Messfelds in der ersten Lage geneigt ist. Die weiteren Lagen sind der Fig. 1B schematisch durch gestrichelte Messfelder 16 gekennzeichnet, die erste Lage ist durch das Messfeld 16 mit den durchgezogenen Linien symbolisiert.
Zur Realsierung der Überführbarkeit des Messfelds 16 in die erste und die weiteren Lagen ist das Messfeld 16 an einem Halteelement 52 der Halteeinrichtung 17 fest angebracht, wobei das Halteelement 52 um eine das Messfeld 16 durchstoßende Drehachse 19 (in Fig. 1A nur sehr schematisch durch einen schwarzen Punkt symbolisiert - vgl. auch Fig. 1B) drehbar ist, so dass auch das Messfeld 16 um diese Drehachse 19 drehbar ist. Ferner ist an dem Halteelement 52 ein Abstandshalter 40 bzw. Taster 40 vorgesehen und das Halteelement 52 ist ferner noch Richtung der Y-Koordinatenachse 22 längsbeweglich verschiebbar, so dass der Abstandshalter 40 in jeder Lage bzw. in jeder Drehstellung des Messfelds 16 bzw. des Halteelements 52 um die Drehachse 19 über die Spitze 53 einen Kontakt zu der Innenfläche 46 der Bohrung 36 herstellen kann. Schließlich ist das Halteelement 52 an einem zwei Stangen 50 umfassenden Gestell 48 der Halteeinrichtung 17 in Längsrichtung der Stangen 50 längsbeweglich verschiebbar.
Aufgrund der oben beschriebenen Bewegungsmöglichkeiten des Halteelements 52 ist das Messfeld 16 durch eine rotatorische und/oder translatorische Bewegungen des Halteelement 52 in die einzelnen Lagen (vgl. auch Fig. 1B) überführbar, wobei der Abstandshalter 40 in jeder Lage durch Kontakt zu der Innenfläche 46 gewährleistet, dass das Zentrum 51 des Koordinatensystems 18 den vorgegebenen Abstand, der dem Radius der kreiszylindrischen Bohrung 36 entspricht, zu der Innenfläche 46 der Bohrung 36 in Richtung der Y-Koordinatenachse aufweist bzw. einhält bzw. im wesentlichen einhält.
Die Auswerteeinheit 32 ist dazu eingerichtet, bei bzw. nach entsprechender Bestrahlung mit dem Laserlichtstrahl 26 der in der ersten Lage des Messfelds 16 erfassten X-Koordinate und Y-Koordinate den Winkelwert null Grad zuzuordnen und aus den in der ersten und den weiteren Lagen erfassten X-Koordinaten und/oder Y-Koordinaten eine geschlossene Bahnkurve zu ermitteln.

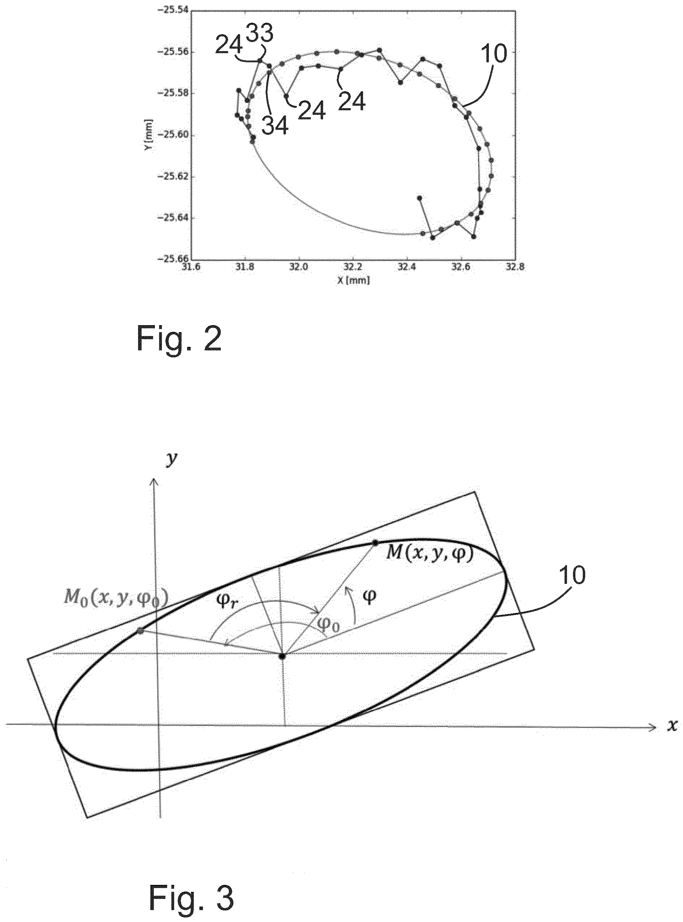

Ferner ist die Auswerteinheit 32 dazu eingerichtet ist, auf der Grundlage der erfassten X-Koordinaten und/oder der erfassten Y-Koordinaten eine Darstellung der Bahnkurve 10 (vgl. Fig. 2) zu ermitteln, die durch den Lagewinkel $\varphi_r$ des Messfelds 16 parametrisiert ist, der sich ausgehend von dem Winkelwert null Grad in Richtung des vorgegebenen Drehsinns 44 bemisst.

Nachfolgend wird ein Ausführungsbeispiel des erfindungsgemäßen Verfahrens anhand der Fig. 1A erläutert.

Das zu erläuternde Verfahren zum Ermitteln einer geschlossenen Bahnkurve 10 (vgl. Fig. 2) mittels des Lasers 12 und des Laserlicht-Sensors 14 umfasst zum einem die folgenden Schritte A bis C:

(A) Anordnen des Messfelds 16 in der kreiszylindrischen Bohrung 36 eines Körpers 39 und Überführen des Messfelds 16 in die erste Lage (vgl. auch Fig. 1B),

(B) Bestrahlen des Messfelds 16 mit dem von dem Laser 12 erzeugten raumfesten Laserlichtstrahl 26 und Erfassen der X-Koordinate und der Y-Koordinate der Position des Laserlicht-Flecks 24 des Laserlichtstrahls 26, welche der Laserlicht-Fleck 24 auf dem Messfeld 16 einnimmt, und

(C) Zeitlich aufeinanderfolgendes Überführen des Messfelds 16 in wenigstens dreißig weitere Lagen, Bestrahlen des Messfelds 16 mit dem Laserlichtstrahl 26 in jeder der weiteren Lagen und Erfassen der X-Koordinate und der Y-Koordinate der Positionen des Laserlicht-Flecks 24 des Laserlichtstrahls 26, welche der Laserlicht-Fleck 24 auf dem Messfeld 16 in jeder der weiteren Lagen einnimmt (vgl. auch Fig. 2).

In der ersten Lage und auch in jeder der weiteren Lagen sind die X-Koordinatenachse 20 und die Y-Koordinatenachse 22 rechtwinkelig zur Zentrumsachse 38 der Bohrung orientiert sind und das Zentrum 51 des Koordinatensystems 18 weist in der ersten Lage und auch in jeder der weiteren Lagen der vorgegebenen Abstand zu der Innenfläche 46 der Bohrung 36 in Richtung der Y-Koordinatenachse 22 auf.

Zur Realisierung der rechtwinkeligen Ausrichtung der X-Koordinatenachse 20 und der Y-Koordinatenachse 22 zur Zentrumsachse 38 weist das Gestellt 48 ferner zwei kreiszylinderförmige Füße 42 auf.

Die weiteren Lagen unterscheiden sich durch die Größe des Lagewinkels $\varphi_r$, um welchen die Y-Koordinatenachse 22 in dem vorgegebenen Drehsinn 44 gegenüber der Y-Koordinatenachse 22 des Messfelds 16 in der ersten Lage geneigt ist, wobei das Messfeld 16 in Schritt C derart zeitlich aufeinanderfolgend in die weiteren Lagen überführt wird, dass der Lagewinkel jeder der weiteren Lagen größer ist als der Lagewinkel jeder zeitlich zuvor eingenommenen Lage bzw. weiteren Lage, wobei in der zeitlich zuletzt eingenommenen Lage die Größe des Lagewinkels ca. 245 Grad beträgt.

Das erfindungsgemäße Verfahren umfasst ferner die folgenden Schritte D und E:

(D) Zuordnen des Winkelwerts null Grad der in der ersten Lage des Messfelds 16 erfassten X-Koordinate und Y-Koordinate, und

(E) Ermitteln der geschlossenen Bahnkurve 10 (vgl. Fig. 2 und 3) mittels der in Schritt (B) und (C) erfassten X-Koordinaten und der in Schritt (B) und(C) erfassten Y-Koordinaten, wobei ferner auf der Grundlage der erfassten X-Koordinaten und der erfassten Y-Koordinaten eine Darstellung der Bahnkurve 10 ermittelt wird, die durch den Lagewinkel $\varphi_r$ des Messfelds 16 parametrisiert ist, der sich ausgehend von dem Winkelwert $\varphi_{r0}$ (vgl. Fig. 1B) in Höhe von null Grad (vgl. Schritt D) in Richtung des vorgegebenen Drehsinns bemisst bzw. der sich ausgehend von dem Lagewinkel $\varphi_{r0}$ mit dem Winkelwert null Grad in Richtung des vorgegebenen Drehsinns bemisst bzw. der sich ausgehend von der durch den Lagewinkel $\varphi_{r0}$ mit dem Winkelwert null Grad definierten Richtung bzw. Raumrichtung in Richtung des vorgegebenen Drehsinns bemisst.

In Schritt E wird eine geschlossene Bahnkurve 10 in Form einer Ellipse durch Kurvenanpassung an die erfassten X-Koordinaten und Y-Koordinaten ermittelt. Zum Ermitteln der parametrisierten Darstellung der Bahnkurve 10 (vgl. Fig. 3) wird jedem Punkt auf der Bahnkurve 10 (vgl. Fig. 2) der sich ausgehend von dem Winkelwert $\varphi_{r0}$ in Höhe von null von Grad in Richtung des vorgegebenen Drehsinns 44 bemessende Lagewinkel $\varphi_r$ zugeordnet. Hierfür ist die Auswerteinheit 32 entsprechend eingerichtet bzw. ausgebildet.

Die Zuordnung erfolgt wie nachfolgend dargelegt.

Der Position 33 des Laserlicht-Flecks 24 auf dem Messfeld 16, die durch die zeitlich zuerst erfasste X-Koordinate und die durch die zeitlich zuerst erfasste Y-Koordinate definiert bzw. vorgegeben ist (vgl. Fig. 2), wird der Winkelwert $\varphi_{r0}$ in Höhe von null Grad zugeordnet. Ferner wird diese Position dem Punkt 34 auf der durch Kurvenanpassung ermittelten Ellipsenbahn zugeordnet wird, der den kleinsten Abstand zu der Ellipsenbahn aufweist. Auch die übrigen Positionen des Laserlicht-Flecks 24 werden jeweils dem Punkt auf der durch Kurvenanpassung ermittelten Ellipsenbahn zugeordnet, der den kleinsten Abstand zu der Ellipsenbahn aufweist.

Die Fig. 3 veranschaulicht, wie beispielhaft ferner jeder erfassten Position des Laserlicht-Flecks 24 ein Punkt M (in Fig. 3 nicht der Punkt 34 sondern der Punkt M) auf der Ellipse zugeordnet wird, deren Winkellage zunächst noch nicht an den vorgegebenen Winkel-Wert $\varphi_{r0}$ in Höhe von null Grad angepasst wurde. Zu Anpassen ist von dem Winkelwert $\varphi$ des Punkts M der Wert $\varphi0$ abzuziehen, um den Winkel $\varphi_r$ zu bestimmen, der sich von dem Winkelwert $\varphi_{r0}$ in Höhe von null Grad aus bemisst. Bei dem Winkel $\varphi0$ handelt es sich um den berechneten Winkel des ersten Messpunktes bzw. um den berechneten Winkel der durch die zeitlich zuerst erfasste X-Koordinate und durch die zeitlich zuerst erfasste Y-Koordinate definierten Position.

Die vorteilhaft ohne Inklinometermessung durch das erfindungsgemäße Verfahren ermittelbare geschlossene gekrümmte Bahnkurve kann vorteilhaft in z.B. aus der DE ?? (sofern bekannt bitte eine entsprechende Patentschrift ergänzen !) bekannten Weise für die Ermittlung der Ausrichtung bzw. Lage einer Referenzachse, die mit dem Laserlichtstrahl 26 zur Deckung gebracht wird, relativ zu der Zentrumsachse 38 (nur sehr schematisch durch einen schwarzen Punkt symbolisiert) der kreiszylindrischen Bohrung 36 des Körpers 39 (hier in Form einer Lageraufnahme) verwendet werden - vgl. Fig. 1A.

Vorteilhaft kann also das erfindungsgemäße Verfahren durch Bereitstellen der geschlossenen Bahnkurve die Ermittlung der Ausrichtung bzw. Lage der Referenzachse - die z.B. die Zentrumsachse einer weiteren Bohrung (hier nicht dargestellt) sein kann - relativ zu der Zentrumsachse 38 der kreiszylindrischen Bohrung 36 des Körpers 39 auch in Situationen mit hoher Genauigkeit ermöglichen, in welchen eine Inklinometermessung nicht oder nicht mit einer hinreichenden Genauigkeit möglich ist. Man denke hierbei z.B. an die Situation auf einem Schiff, wo eine Inklinometermessung nicht oder nur sehr ungenau möglich ist.

Bezugszeichenliste

| | |
|---|---|
| 10 | Bahnkurve |
| 12 | Laser |
| 14 | Laserlicht-Sensor |
| 16 | Messfeld |
| 17 | Halteeinrichtung |
| 18 | Koordinatensystem |
| 19 | Drehachse |
| 20 | X-Koordinatenachse |
| 22 | Y-Koordinatenachse |
| 24 | Laserlicht-Fleck |
| 26 | Laserlichtstrahl |
| 28 | Vorrichtung |
| 32 | Auswerteeinheit |
| 33 | Position |
| 34 | Punkt |
| 36 | Bohrung |
| 38 | Zentrumsachse |
| 39 | Körper |
| 40 | Abstandshalter |
| 42 | Fuß |
| 44 | Drehsinn |
| 46 | Innenfläche |
| 48 | Gestell |
| 50 | Stange |
| 51 | Zentrum |
| 52 | Halteelement |
| 53 | Spitze |

**Patentansprüche**

**1.** Verfahren zum Ermitteln einer geschlossenen Bahnkurve (10) mittels eines Lasers (12) und einem Laserlicht-Sensor (14) mit einem ebenen Messfeld (16),

wobei das Messfeld (16) ein Koordinatensystem (18) mit einer X-Koordinatenachse (20) und einer zu der X-Koordinatenachse (20) rechtwinkeligen Y-Koordinatenachse (22) aufweist, wobei der Laserlicht-Sensor (14) dazu eingerichtet ist, die X-Koordinate und Y-Koordinate der Position des Laserlicht-Flecks (24) eines auf das Messfeld (16) auftreffenden Laserlichtstrahls (26) des Lasers (12) auf dem Messfeld (16) zu erfassen, wobei das Verfahren die folgenden Schritte umfasst:

(A) Anordnen des Messfelds (16) in einer kreiszylindrischen Bohrung (36) eines Körpers (39) und Überführen des Messfelds in eine erste Lage

(B) Bestrahlen des Messfelds (16) mit einem von dem Laser (12) erzeugten Laserlichtstrahl (26) und Erfassen der X-Koordinate und der Y-Koordinate der Position des Laserlicht-Flecks (24) des Laserlichtstrahls (26), welche der Laserlicht-Fleck (24) auf dem Messfeld (16) einnimmt,

(C) Zeitlich aufeinanderfolgendes Überführen des Messfelds (16) in wenigstens zwei weitere Lagen, Bestrahlen des Messfelds (16) mit dem Laserlichtstrahl (26) in jeder der weiteren Lagen und Erfassen der X-Koordinate und der Y-Koordinate der Positionen des Laserlicht-Flecks (24) des Laserlichtstrahls (26), welche der Laserlicht-Fleck (24) auf dem Messfeld (16) in jeder der weiteren Lagen einnimmt, wobei in der ersten Lage und auch in jeder der weiteren Lagen die X-Koordinatenachse (20) und die Y-Koordinatenachse (22) rechtwinkelig zur Zentrumsachse (38) der Bohrung (36) orientiert sind und das Zentrum (51) des Koordinatensystems (18) einen vorgegebenen Abstand zu der Innenfläche (46) der Bohrung (36) in Richtung der X-Koordinatenachse (20) oder der Y-Koordinatenachse (22) aufweist, wobei sich weiteren Lagen durch die Größe des Lagewinkels ($\varphi_r$) unterscheiden, um welchen die Y-Koordinatenachse (22) oder die X-Koordinatenachse in einem vorgegebenen Drehsinn (44) gegenüber der Y-Koordinatenachse (22) oder der X-Koordinatenachse (20) des Messfelds (16) in der ersten Lage geneigt ist, und wobei das Messfeld (16) in Schritt (C) derart zeitlich aufeinanderfolgend in die wenigstens zwei weiteren Lagen überführt wird, dass der Lagewinkel jeder der weiteren Lagen größer ist als der Lagewinkel jeder zeitlich zuvor eingenommenen Lage, wobei in der zeitlich zuletzt eingenommenen Lage die Größe des Lagewinkels wenigstens 90 Grad beträgt,

(D) Zuordnen des Lagewinkel-Werts null Grad der in der ersten Lage des Messfelds (16) erfassten X-Koordinate und Y-Koordinate,

(E) Ermitteln der geschlossenen Bahnkurve (10) mittels der in Schritt (B) und (C) erfassten X-Koordinaten und/oder der in Schritt (B) und(C) erfassten Y-Koordinaten, wobei in Schritt (E) ferner auf der Grundlage der erfassten X-Koordinaten und/oder der erfassten Y-Koordinaten eine Darstellung der Bahnkurve (10) ermittelt wird, die durch den Lagewinkel des Messfelds (16) parametrisiert ist, der sich ausgehend von dem Lagewinkel-Wert null Grad in Richtung des vorgegebenen Drehsinns bemisst.

2. Verfahren nach Anspruch 1, **dadurch gekennzeichnet, dass** vorgegebenen Abstand zu der Innenfläche (46) der Bohrung (36) in Richtung der X-Koordinatenachse (20) oder der Y-Koordinatenachse (22) dem Radius der Bohrung (36) entspricht.

3. Verfahren nach Anspruch 1 oder 2, **dadurch gekennzeichnet, dass** die geschlossene Bahnkurve (10) eine Ellipse oder ein Kreis ist.

4. Verfahren nach Anspruch 1 oder 2, **dadurch gekennzeichnet, dass** das Messfeld (16) in Schritt (C) in wenigstens fünfzehn weitere Lagen überführt wird, dass in der zeitlich zuletzt eingenommenen Lage die Größe des Lagewinkels 360 Grad beträgt, und dass in Schritt (E) eine geschlossene und durch den Lagewinkel des Messfelds (16) parametrisierte Bahnkurve (10) in Form einer Ellipse oder eines Kreises ermittelt wird, wobei zum Ermitteln der parametrisierten Bahnkurve (10) ausschließlich nur die erfassten Y-Koordinaten oder ausschließlich nur die erfassten X-Koordinaten verwendet werden.

5. Verfahren nach Anspruch 1 oder 2, **dadurch gekennzeichnet, dass** das Messfeld (16) in Schritt (C) in wenigstens zwei weitere Lagen überführt wird, dass in der zeitlich zuletzt eingenommenen Lage die Größe des Lagewinkels wenigstens 90 Grad und weniger als 360 Grad oder im wesentlichen 180 Grad beträgt, wobei in Schritt (E) eine geschlossene Bahnkurve (10) in Form einer Ellipse oder eines Kreises durch Kurvenanpassung an die erfassten X-Koordinaten und Y-Koordinaten ermittelt wird, und wobei zum Ermitteln der parametrisierten Darstellung der Bahnkurve (10) jedem Punkt auf der Bahnkurve (10) der sich ausgehend von dem Winkelwert null Grad in Richtung des vorgegebenen Drehsinns bemessende Lagewinkel zugeordnet wird.

6. Verfahren nach einem der vorangehenden Ansprüche, **dadurch gekennzeichnet, dass** die Schritte (D) und (E) automatisiert vorgenommen werden.

7. Vorrichtung (28) zum Ermitteln einer geschlossenen Bahnkurve (10), wobei die Vorrichtung (28) einen Laser (12), einen Laserlicht-Sensor (14) mit einem ebenen Messfeld (16), eine Halteeinrichtung (17) und eine Auswerteeinheit (32) aufweist,

wobei das Messfeld (16) ein Koordinatensystem (18) mit einer X-Koordinatenachse (20) und einer zu der X-Koordinatenachse (20) rechtwinkeligen Y-Koordinatenachse (22) aufweist, wobei der Laserlicht-Sensor (14) dazu eingerichtet ist, die X-Koordinate und Y-Koordinate der Position des Laserlicht-Flecks (24) des auf das Messfeld (16) auftreffenden Laserlichtstrahls (26) auf dem Messfeld (16) zu erfassen, der von dem Laser (12) erzeugbar ist,

wobei das Messfeld (16) derart beweglich an der Halteeinrichtung (17) angebracht ist, dass das Messfeld (16) in eine erste und weitere Lagen an der Halteeinrichtung (17) überführbar ist, in welchen die X-Koordinatenachse (20) und die Y-Koordinatenachse (22) rechtwinkelig zur Zentrumsachse (38) einer kreiszylindrischen Bohrung (36) orientiert sind und in welchen das Zentrum (51) des Koordinatensystems (18) einen vorgegebenen Abstand zu der Innenfläche (46) der Bohrung (36) in Richtung der X-Koordinatenachse (20) oder der Y-Koordinatenachse (22) aufweist, wobei sich weiteren Lagen durch die Größe des Lagewinkels unterscheiden, um welchen die Y-Koordinatenachse (22) oder die X-Koordinatenachse in einem vorgegebenen Drehsinn (44) gegenüber der Y-Koordinatenachse (20) oder der X-Koordinatenachse (22) des Messfelds (16) in der ersten Lage geneigt ist,

wobei die Auswerteeinheit (32) dazu eingerichtet ist, der in der ersten Lage des Messfelds (16) erfassten X-Koordinate und Y-Koordinate den Winkelwert null Grad zuzuordnen und aus den in der ersten und den weiteren Lagen erfassten X-Koordinaten und/oder Y-Koordinaten die geschlossene Bahnkurve (10) zu ermitteln, und

wobei die Auswerteinheit (32) ferner dazu eingerichtet ist, auf der Grundlage der erfassten X-Koordinaten und/oder der erfassten Y-Koordinaten eine Darstellung der Bahnkurve (10) zu ermitteln, die durch den Lagewinkel des Messfelds (16) parametrisiert ist, der sich ausgehend von dem Winkelwert null Grad in Richtung des vorgegebenen Drehsinns bemisst.

8. Vorrichtung (36) nach Anspruch 7, **dadurch gekennzeichnet, dass** die geschlossene Bahnkurve (10) eine Ellipse oder ein Kreis ist.

9. Vorrichtung (36) nach Anspruch 7, **dadurch gekennzeichnet, dass** die geschlossene Bahnkurve (10) eine Ellipse oder ein Kreis ist, und dass die Auswerteeinheit (32) ferner dazu eingerichtet ist, zum Ermitteln der durch den Lagewinkel parametrisierten Bahnkurve (10) ausschließlich nur die erfassten Y-Koordinaten oder ausschließlich nur die erfassten X-Koordinaten zu verwenden, wenn das Messfeld (16) in wenigstens fünfzehn weitere Lagen überführt wird und wenn in der zeitlich zuletzt eingenommenen Lage die Größe des Lagewinkels 360 Grad beträgt.

10. Vorrichtung nach Anspruch 7, **dadurch gekennzeichnet, dass** die Auswerteeinheit (32) dazu eingerichtet ist, eine geschlossene Bahnkurve in Form einer Ellipse oder eines Kreises durch Kurvenanpassung an die erfassten X-Koordinaten und Y-Koordinaten zu ermitteln und zum Ermitteln der parametrisierten Darstellung der Bahnkurve (10) jedem Punkt auf der Bahnkurve (10) den sich ausgehend von dem Winkelwert null Grad in Richtung des vorgegebenen Drehsinns bemessenden Lagewinkel zuzuordnen, wenn das Messfeld (16) in wenigstens zwei weitere Lagen überführt wird und in der zeitlich zuletzt eingenommenen Lage die Größe des Lagewinkels wenigstens 90 Grad und weniger als 360 Grad oder im wesentlichen 180 Grad beträgt.

## Claims

1. Method for ascertaining a closed trajectory (10) by means of a laser (12) and a laser light sensor (14) with a plane measurement field (16),

wherein the measuring field (16) has a coordinate system (18) with an X-coordinate axis (20) and a Y-coordinate axis (22) at right angles to the X-coordinate axis (20), wherein the laser light sensor (14) is configured to detect on the measurement field (16) the X-coordinate and Y-coordinate of the position of the laser light spot (24) of a laser light beam (26) of the laser (12) striking the measuring field (16),

wherein the method comprises the following steps:

(A) arranging the measuring field (16) in a circular cylindrical bore (36) of a body (39) and transferring the measuring field into a first orientation,

(B) irradiating the measuring field (16) with a laser light beam (26) produced by the laser (12) and detecting the X-coordinate and the Y-coordinate of the position of the laser light spot (24) of the laser light beam (26), which the laser light spot (24) adopts on the measuring field (16),

(C) transferring the measuring field (16) successively in time into at least two further orientations, irradiating the measuring field (16) with the laser light beam (26) in each of the further orientations and detecting the X-coordinate and the Y-coordinate of the positions of the laser light spot (24) of the laser light beam (26), which the laser light spot (24) adopt on the measuring field (16) in each of the further orientations,

wherein the X-coordinate axis (20) and the Y-coordinate axis (22) are oriented at right angles to the centre axis (38) of the bore (36) in the first orientation and also in each of the further orientations and the centre (51) of the coordinate system (18) has a predetermined distance from the inner surface (46) of the bore (36) in the direction of the X-coordinate axis (20) or the Y-coordinate axis (22), wherein the further orientations differ in terms of the magnitude of the orientation angle ($\varphi_R$) by which the Y-coordinate axis (22) or the X-coordinate axis is inclined in a predetermined sense of rotation (44) in relation to the Y-coordinate axis (22) or the X-coordinate axis (20) of the measuring field (16) in the first orientation, and wherein the measuring field (16) is transferred into the at least two further orientations in step (C) in such a temporal successive fashion that the orientation angle of each of the further orientations is greater than the orientation angle of each orientation adopted earlier in time, wherein, in the orientation adopted last in time, the magnitude of the orientation angle is at least 90 degrees,

(D) assigning the orientation angle value of zero degrees to the X-coordinate and Y-coordinate detected in the first orientation of the measuring field (16),

(E) ascertaining the closed trajectory (10) by means of the X-coordinates detected in step (B) and (C) and/or the Y-coordinates detected in step (B) and (C),

wherein, further, a representation of the trajectory (10) is ascertained in step (E) on the basis of the detected X-coordinates and/or the detected Y-coordinates, said representation of the trajectory being parameterized by the orientation angle of the measuring field (16), which is measured in the direction of the predetermined sense of rotation, proceeding from the orientation angle value of zero degrees.

2. Method according to Claim 1, **characterized in that** the predetermined distance to the inner surface (46) of the bore (36) in the direction of the X-coordinate axis (20) or the Y-coordinate axis (22) corresponds to the radius of the bore (36).

3. Method according to Claim 1 or 2, **characterized in that** the closed trajectory (10) is an ellipse or a circle.

4. Method according to Claim 1 or 2, **characterized in that** the measuring field (16) is transferred into at least fifteen further orientations in step (C), **in that** the magnitude of the orientation angle is 360 degrees in the orientation adopted last in time and **in that** a closed trajectory (10) in the form of an ellipse or a circle that is parameterized by the orientation angle of the measuring field (16) is ascertained in step (E), wherein use is made exclusively of only the detected Y-coordinates or use is made exclusively of only the detected X-coordinates for the purposes of ascertaining the parameterized trajectory (10).

5. Method according to Claim 1 or 2, **characterized in that** the measuring field (16) is transferred into at least two further orientations in step (C), **in that** the magnitude of the orientation angle is at least 90 degrees and less than 360 degrees or substantially 180 degrees in the orientation adopted last in time, wherein a closed trajectory (10) in the form of an ellipse or a circle is ascertained in step (E) by fitting a curve to the detected X-coordinates and Y-coordinates, and wherein, for the purposes of ascertaining the parameterized representation of the trajectory (10), the orientation angle measured proceeding from the angle value of zero degrees in the direction of the predetermined sense of rotation is assigned to each point on the trajectory (10).

6. Method according to any one of the preceding claims, **characterized in that** steps (D) and (E) are undertaken in automated fashion.

7. Apparatus (28) for ascertaining a closed trajectory (10), wherein the apparatus (28) comprises a laser (12), a laser light sensor (14) with a plane measuring field (16), a holding device (17) and an evaluation unit (32),

wherein the measuring field (16) has a coordinate system (18) with an X-coordinate axis (20) and a Y-coordinate axis (22) at right angles to the X-coordinate axis (20), wherein the laser light sensor (14) is configured to detect on the measurement field (16) the X-coordinate and Y-coordinate of the position of the laser light spot (24) of the laser light beam (26), which can be generated by the laser (12), striking the measuring field (16),

wherein the measuring field (16) is attached in such a movable fashion to the holding device (17) that the measuring field (16) is transferable into a first orientation and further orientations on the holding device (17), the X-coordinate axis (20) and the Y-coordinate axis (22) being oriented at right angles to the centre axis (38) of a circular cylindrical bore (36) in said orientations and the centre (51) of the coordinate system (18) having a predetermined distance from the inner surface (46) of the bore (36) in the direction of the X-coordinate axis (20) or the Y-coordinate axis (22) in said orientations, wherein further orientations differ by the magnitude of the orientation angle by which the Y-coordinate axis (22) or the X-coordinate axis is inclined in a predetermined sense of rotation (44) in relation to the Y-coordinate axis (20) or the X-coordinate axis (22) of the measuring field (16) in the first orientation, wherein the evaluation unit (32) is configured to assign the angle value of zero degrees to the X-coordinate and Y-coordinate detected in the first orientation of the measuring field (16) and to ascertain the closed trajectory (10) from the X-coordinates and/or Y-coordinates detected in the first and the further orientations, and

wherein the evaluation unit (32) is further configured to ascertain a representation of the trajectory (10) on the basis of the detected X-coordinates and/or the detected Y-coordinates, said representation of the trajectory being parameterized by the orientation angle of the measuring field (16) that is measured proceeding from the angle value of zero degrees in the direction of the predetermined sense of rotation.

8. Apparatus (36) according to Claim 7, **characterized in that** the closed trajectory (10) is an ellipse or a circle.

9. Apparatus (36) according to Claim 7, **characterized in that** the closed trajectory (10) is an ellipse or a circle and **in that** the evaluation unit (32) is further configured to exclusively use only the detected Y-coordinates or exclusively use only the detected X-coordinates for the purposes of ascertaining the trajectory (10) that is parameterized by the orientation angle if the measuring field (16) is transferred into at least fifteen further orientations and if the magnitude of the orientation angle is 360 degrees in the orientation adopted last in time.

10. Apparatus according to Claim 7, **characterized in that** the evaluation unit (32) is configured to ascertain a closed trajectory in the form of an ellipse or a circle by fitting a curve to the detected X-coordinates and Y coordinates and to assign the orientation angle measured proceeding from the angle value of zero degrees in the direction of the predetermined sense of rotation to each point on the trajectory (10) for the purposes of ascertaining the parameterized representation of the trajectory (10) if the measuring field (16) is transferred into at least two further orientations and the magnitude of the orientation angle is at least 90 degrees and less than 360 degrees or substantially 180 degrees in the orientation adopted last in time.

## Revendications

1. Procédé de détermination d'une trajectoire (10) fermée au moyen d'un laser (12) et d'un capteur de lumière laser (14) ayant un champ de mesure (16) plan,

dans lequel le champ de mesure (16) présente un système de coordonnées (18) ayant un axe de coordonnées X (20) et un axe de coordonnées Y (22) perpendiculaire à l'axe de coordonnées X (20),

dans lequel le capteur de lumière laser (14) est conçu pour détecter dans le champ de mesure (16) la coordonnée X et la coordonnée Y de la position de la tache de lumière laser (24) d'un faisceau de lumière laser (26) du laser (12) incident sur le champ de mesure (16), le procédé comprenant les étapes suivantes :

(A) disposer le champ de mesure (16) dans un alésage cylindrique circulaire (36) d'un corps (39) et transférer le champ de mesure vers une première position,

(B) irradier le champ de mesure (16) avec un faisceau de lumière laser (26) généré par le laser (12) et détecter la coordonnée X et la coordonnée Y de la position de la tache de lumière laser (24) du faisceau de lumière laser (26) que la tache de lumière laser (24) occupe sur le champ de mesure (16),

(C) transférer successivement dans le temps le champ de mesure (16) vers au moins deux autres positions, irradier le champ de mesure (16) avec le faisceau de lumière laser (26) dans chacune des autres positions, et détecter la coordonnée X et la coordonnée Y des positions de la tache de lumière laser (24) du faisceau de lumière laser (26) que la tache de lumière laser (24) occupe dans chaque autre position sur le champ de mesure (16),

dans lequel, dans la première position ainsi que dans chacune des autres positions, l'axe de coordonnées X (20) et l'axe de coordonnées Y (22) sont orientés perpendiculairement à l'axe central (38) de l'alésage (36) et le centre (51) du système de coordonnées (18) se trouve à une distance prédéterminée de la surface interne (46) de l'alésage (36) dans la direction de l'axe de coordonnées X (20) ou de l'axe de coordonnées Y (22), dans lequel d'autres positions se distinguent par la valeur de l'angle de position (($\varphi_r$) dont l'axe de coordonnées Y (22) ou l'axe de coordonnées X est incliné dans un sens de rotation prédéterminé (44) par rapport à l'axe de coordonnées Y (22) ou à l'axe de coordonnées X (20) du champ de mesure (16) dans la première position, et dans lequel, lors de l'étape (C), le champ de mesure (16) est transféré séquentiellement dans le temps vers lesdites au moins deux autres positions, de manière à ce que l'angle de position de chacune des autres positions soit supérieur à l'angle de position de chaque position précédemment occupée dans le temps, dans lequel la valeur de l'angle de position est d'au moins 90 degrés dans la dernière position occupée dans le temps,

(D) associer la valeur d'angle de position de zéro degré à la coordonnée X et à la coordonnée Y détectées dans la première position du champ de mesure (16),

(E) déterminer la trajectoire (10) fermée au moyen des coordonnées X détectées lors des étapes (B) et (C) et/ou au moyen des coordonnées Y détectées lors des étapes (B) et (C),

dans lequel, lors de l'étape (E), une représentation de la trajectoire (10) est en outre déterminée sur la base des coordonnées X et/ou des coordonnées Y détectées, laquelle représentation est paramétrée par l'angle de position du champ de mesure (16) qui est mesuré à partir de la valeur d'angle de position de zéro degré dans la direction du sens de rotation prédéterminé.

2. Procédé selon la revendication 1, **caractérisé en ce que** la distance prédéterminée par rapport à la surface interne (46) de l'alésage (36) dans la direction de l'axe de coordonnées X (20) ou de l'axe de coordonnées Y (22) correspond au rayon de l'alésage (36).

3. Procédé selon la revendication 1 ou 2, **caractérisé en ce que** la trajectoire (10) fermée est une ellipse ou un cercle.

4. Procédé selon la revendication 1 ou 2, **caractérisé en ce que**, lors de l'étape (C), le champ de mesure (16) est transféré vers au moins quinze autres positions, **en ce que**, dans la position occupée en dernier dans le temps, la valeur de l'angle de position est de 360 degrés et **en ce que**, lors de l'étape (E), une trajectoire (10) paramétrée par l'angle de position du champ de mesure (16) est déterminée sous la forme d'une ellipse ou d'un cercle, dans lequel seules les coordonnées Y détectées ou seules les coordonnées X détectées sont utilisées pour déterminer la trajectoire (10) paramétrée.

5. Procédé selon la revendication 1 ou 2, **caractérisé en ce que**, lors de l'étape (C), le champ de mesure (16) est transféré vers au moins deux autres positions, **en ce que**, dans la position occupée en dernier dans le temps, la valeur de l'angle de position est d'au moins 90 degrés et est inférieure à 360 degrés ou est sensiblement égale à 180 degrés, dans lequel, lors de l'étape (E), une trajectoire (10) fermée sous la forme d'une ellipse ou d'un cercle est déterminée par ajustement de courbe aux coordonnées X et aux coordonnées Y détectées, et dans lequel, afin de déterminer la représentation paramétrée de la trajectoire (10), l'angle de position mesuré à partir de la valeur angulaire de zéro degré dans la direction du sens de rotation prédéterminé est associé à chaque point de la trajectoire (10).

6. Procédé selon l'une des revendications précédentes, **caractérisé en ce que** les étapes (D) et (E) sont effectuées automatiquement.

7. Dispositif (28) de détermination d'une trajectoire (10) fermée, dans lequel le dispositif (28) comporte un laser (12), un capteur de lumière laser (14) ayant un champ de mesure (16) plan, un dispositif de support (17) et une unité de traitement (32),

dans lequel le champ de mesure (16) présente un système de coordonnées (18) ayant un axe de coordonnées X (20) et un axe de coordonnées Y (22) perpendiculaire à l'axe de coordonnées X (20), dans lequel le capteur de lumière laser (14) est conçu pour détecter dans le champ de mesure (16) la coordonnée X et la coordonnée Y de la position de la tache de lumière laser (24) du faisceau de lumière laser (26) pouvant être généré par le laser (12) et incident sur le champ de mesure (16),

dans lequel le champ de mesure (16) est placé de manière mobile sur le dispositif de support (17) de manière à ce que le champ de mesure (16) puisse être transféré, sur le dispositif de support (17), vers une première position et vers une autre positon dans lesquelles l'axe de coordonnées X (20) et l'axe de coordonnées Y (22) sont orientés perpendiculairement à l'axe central (38) d'un alésage cylindrique circulaire (36) et dans lesquelles le centre (51) du système de coordonnées (18) présente une distance prédéterminée par rapport à la surface interne (46) de l'alésage (36), dans la direction de l'axe de coordonnées X (20) ou de l'axe de coordonnées Y (22), dans lequel d'autres positions se distinguent par la valeur de l'angle de position dont l'axe de coordonnées Y (22) ou l'axe de coordonnées X est incliné dans un sens de rotation prédéterminé (44) par rapport à l'axe de coordonnées Y (20) ou à l'axe de coordonnées X (22) du champ de mesure (16) dans la première position, dans lequel l'unité d'évaluation (32) est conçue pour associer la valeur angulaire de zéro degré à la coordonnée X et à la coordonnée Y détectées dans la première position du champ de mesure (16) et pour déterminer la trajectoire (10) fermée à partir des coordonnées X et/ou des coordonnées Y détectées dans la première position et dans les autre positions, et

dans lequel l'unité d'évaluation (32) est en outre conçue pour déterminer, sur la base des coordonnées X détectées et/ou des coordonnées Y détectées, une représentation de la trajectoire (10) paramétrée par l'angle de position du champ de mesure (16), qui est mesuré à partir de la valeur angulaire de zéro degré dans la direction du sens de rotation prédéterminé.

8. Dispositif (36) selon la revendication 7, **caractérisé en ce que** la trajectoire (10) fermée est une ellipse ou un cercle.

9. Dispositif (36) selon la revendication 7, **caractérisé en ce que** la trajectoire (10) fermée est une ellipse ou un cercle, et **en ce que** l'unité d'évaluation (32) est en outre conçue pour utiliser les seules coordonnées Y détectées ou les seules coordonnées X détectées pour déterminer la trajectoire (10) paramétrée par l'angle de position, lorsque le champ de mesure (16) est transféré vers au moins quinze autres positions et lorsque la valeur de l'angle de position est de 360 degrés dans la position occupée en dernier dans le temps.

10. Dispositif selon la revendication 7, **caractérisé en ce que** l'unité d'évaluation (32) est conçue pour déterminer une trajectoire fermée sous la forme d'une ellipse ou d'un cercle par ajustement de courbe aux coordonnées X et aux coordonnées Y détectées et, afin de déterminer la représentation paramétrée de la trajectoire (10), pour associer à chaque point de la trajectoire (10) l'angle de position mesuré à partir de la valeur angulaire de zéro degré dans la direction du sens de rotation prédéterminé, lorsque le champ de mesure (16) est transféré vers au moins deux autres positions et lorsque, dans la position occupée en dernier dans le temps, la valeur de l'angle de position est d'au moins 90 degrés et est inférieure à 360 degrés ou est de sensiblement 180 degrés.

Fig.1A

Fig. 1B

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19506471 A1
- DE 10236555 A1
- DE 10142462 A1
- DE 10138831 A1
- DE 3911307 A1
- DE 19949834 A1
- DE 102004024398 A1
- DE 112044000113 T5

- US 5717491 A
- US 20050237516 A1
- US 20060196060 A1
- DE 102006012633 A1
- DE 102012022487 A1
- DE 10352719 A1
- DE 10109462 A1